(19) **Europäisches Patentamt**

**European Patent Office**

**Office européen des brevets**

(11) **EP 1 300 741 A2**

(12) **EUROPÄISCHE PATENTANMELDUNG**

(43) Veröffentlichungstag:
**09.04.2003 Patentblatt 2003/15**

(51) Int Cl.⁷: **G05B 19/418**

(21) Anmeldenummer: **02021560.4**

(22) Anmeldetag: **26.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **02.10.2001 DE 10148752**

(71) Anmelder: **SIEMENS AKTIENGESELLSCHAFT**
**80333 München (DE)**

(72) Erfinder: **Steindl, Günter**
**92284 Trasslberg (DE)**

(54) **Zeitüberwachung bei azyklischer Kommunikation**

(57) Die Erfindung betrifft ein Verfahren und ein System zur Zeitüberwachung einer Kommunikationsbeziehung in einem Automatisierungssystem. Bei dem Verfahren wird eine zu überwachende Maximalzeit definiert und gespeichert, werden in mindestens einer Speicherzelle Werte eines Timers in Form von Zeitstempeln gespeichert und wird bei jeder Durchführung der Kommunikation die Differenz aus einer aktuellen Zeit und dem jeweiligen gespeicherten Zeitstempel mit der Maximalzeit verglichen.

**Beschreibung**

Bei vielen Kommunikationsverfahren werden einzelne Kommunikationsbeziehungen zeitüberwacht. Dabei wird im allgemeinen für jede "Verbindung" eine eigene Zeitzelle (Timer) benötigt. Diese Bearbeitung der Zeitzellen verbraucht "unnötig" Rechenzeit. Bei sehr vielen gleichzeitigen Kommunikationsbeziehungen steigt die Anzahl der benötigten Timer stark an. Bisher wurde deshalb die Anzahl der gleichzeitigen Kommunikationsbeziehungen begrenzt.

Der Erfindung liegt die Aufgabe zugrunde, ein Verfahren sowie ein System anzugeben, welches die genannten Nachteile vermeidet.

Diese Aufgabe wird mit dem im Anspruch 1 angegebenen Verfahren bzw. mit dem im Anspruch 2 angegebenen System gelöst.

Bei dem im Folgenden beschriebenen Verfahren wird nur noch ein Timer (GlobalTime) für alle Kommunikationsbeziehungen und ein Zeitstempel (TimeStamp) je Kommunikationsbeziehung benötigt. Dadurch entfällt der "Refresh" der im allgemeinen benötigten Zeitzellen. Wird eine Kommunikationsbeziehungen gestartet, so wird ihr eine Maximalzeit (Timeout) mitgegeben, die für diese Verbindung zu überwachen ist. Mit der ersten Kommunikation wird der aktuelle Wert von GlobalTime für diese Beziehung im TimeStamp gespeichert. Bei jeder Durchführung der Kommunikation wird immer geprüft ob die Relation

$$\text{Timeout} < \left|\text{GlobalTime}_{\text{AKTUELL}} - \text{TimeStamp}_{\text{GESPEICHERT}}\right|$$

erfüllt ist. Ist sie erfüllt, so ist noch Restwartezeit vorhanden und die Beziehung wird aufrecht erhalten. Ist sie nicht mehr erfüllt, so wird die für diese Kommunikationsbeziehungen definierte Strategie bei Zeitüberschreitung bearbeitet.

Bei dem Entwurf des Designs für neue PROFIBUS-ASICs (ASIC = Application-Specific Integrated Circuit = anwenderspezifischer integrierter Schaltkreis) sollten die Grenzen der früheren Designs überwunden werden. Dazu gehörte auch die Erhöhung des Gleichzeitigkeitsfaktors der azyklischen Kommunikation. Bei einer Erhöhung im alten Modell hätte das zu einer Vervielfachung der benötigten Timer geführt. Der erhöhte Gleichzeitigkeitsfaktor führt außerdem zu einer wesentlich höheren Belastung des Automatisierungssystems (= Host der Kommunikation) selbst, da die Abarbeitung der einzelnen Kommunikationsbeziehungen auf dem Host erfolgen muss. Durch die Änderung der Zeitüberwachung entsprechend der Erfindung ist eine Verlagerung in die ASICs möglich und realisiert. Dadurch entfällt nicht nur der Refresh der Zeitzellen, sondern auch das "unproduktive" Polling durch den Host, das jetzt der ASIC selbst übernehmen kann.

Die Erfindung ist zur Verwendung in ASICs für die PROFIBUS-Protokolle (PROFIBUS-DP MasterSlave-Azyklisch Klasse 1, MasterSlave-Azyklisch Klasse 2 und MasterMaster-Azyklisch) vorgesehen. Sie ist aber grundsätzlich für alle pollenden, zeitüberwachten Kommunikationsbeziehungen bei Punkt-zu-Punkt-Kommunikationsbeziehungen anwendbar. Allgemein wird unter Polling eine zyklische Abfrage verstanden. Der Begriff wird daher in den unterschiedlichsten Kontexten gebraucht. So ist Polling z.B. ein Netzwerk-Zugriffsverfahren, bei dem eine zentrale Station (Master) alle anderen Stationen (Slaves) reihum abfragt (pollt). Der Master kann die Slaves fragen, ob sie Daten zu übertragen haben, oder kann benötigte Daten direkt anfordern. In einem reinen Master-Slave-Netz kann es immer nur einen Master geben. Um mehrere Master zu erlauben, muss das Pollingverfahren mit anderen Zugriffsverfahren kombiniert werden. So erfolgt z.B. beim Profibus die Arbitrierung des Masters über ein Token-Rotationsverfahren.

Unter Arbitration versteht man die möglichst gerechte Zuteilung von Ressourcen (Leitungen, Busse, Geräte) an die Benutzer. Als Token-Passing wird ein Zugriffsverfahren bezeichnet, das mit Hilfe eines Tokens die Sendeberechtigung vergibt. Der Token wird von Station zu Station weitergegeben. Außerdem muss Token-Passing Vorkehrungen treffen für das Anund Abschalten von Stationen (Station im Tokenumlauf aufnehmen oder streichen) sowie für einen Tokenverlust (Station, die gerade den Token besitzt, fällt aus). U. A. arbeiten IEEE 802.4, IEEE 802.5, Arcnet, FDDI, Modbus Plus und Profibus mit Token-Passing. Großer Vorteil des Token-Passings ist das deterministische Übertragungsverhalten solcher Netze.

Zusammengefasst betrifft die Erfindung somit ein Verfahren und ein System zur Zeitüberwachung einer insbesondere azyklischen Kommunikationsbeziehung in einem Automatisierungssystem. Bei dem Verfahren wird eine zu überwachende Maximalzeit definiert und gespeichert, werden in mindestens einer Speicherzelle Werte eines Timers in Form von Zeitstempeln gespeichert und wird bei jeder Durchführung der Kommunikation die Differenz aus einer aktuellen Zeit und dem jeweiligen gespeicherten Zeitstempel mit der Maximalzeit verglichen.

**Patentansprüche**

**1.** Verfahren zur Zeitüberwachung einer Kommunikationsbeziehung in einem Automatisierungssystem, bei welchem

- eine zu überwachende Maximalzeit definiert und gespeichert wird,
- in mindestens einer Speicherzelle Werte eines Timers in Form von Zeitstempeln gespeichert werden und
- bei jeder Durchführung der Kommunikation die Differenz aus einer aktuellen Zeit und dem jeweiligen gespeicherten Zeitstempel mit der Maximalzeit verglichen wird.

2. System zur Zeitüberwachung einer Kommunikationsbeziehung in einem Automatisierungssystem,

- mit Mitteln zur Definition und Speicherung einer zu überwachenden Maximalzeit,
- mit mindestens einer Speicherzelle zur Speicherung von Werten eines Timers in Form von Zeitstempeln und
- mit Vergleichsmitteln zum Vergleich der Differenz aus einer aktuellen Zeit und dem jeweiligen gespeicherten Zeitstempel mit der Maximalzeit bei jeder Durchführung der Kommunikation.